# EUROPEAN PATENT APPLICATION

(11) **EP 2 466 076 A1**
(43) Date of publication of application: **20.06.2012**
(21) Application number: 10196025.0
(22) Date of filing: 20.12.2010
(51) Int. Cl.: F01D 17/14, F16K 27/12, F16K 49/00

(54) **High temperature steam valve**

(71) Applicant: Alstom Technology Ltd, 5400 Baden (CH)
(72) Inventor: Reigl, Martin, CH-5420, Ehrendingen (CH); Suter, Franz, CH-5412, Gebenstorf (CH)

(57) **Abstract**

A high temperature actuated steam valve (5) is provided that has a connector (30) extending between the valve casing (10) and its actuator (20). The connector (30) comprises two spacers (35, 40) made of materials each with a different hot strength wherein the first spacer (35), fixed adjacent the casing (10), has a higher hot strength that the second spacer (40), which is fixed adjacent to the actuator (20).

## Description

The disclosure relates generally to high temperature steam valves with actuators and specifically to means for limiting the heat exposure of such actuators.

For the purpose of this specification, the term "high temperature" shall be taken to mean greater than about 650 degrees Celsius.

### BACKGROUND INFORMATION

With the need to improve steam turbine efficiency there is a drive to increase steam turbine operation temperature. The higher temperatures however create new material challenges. For example, the commonly used heat resistant 12-Cr steel alloy, which is suitable for use up to about 610 degrees Celsius, is not suitable when temperatures exceed 650 degrees Celsius. In such cases a more suitable, but more expensive, nickel alloy is typically required.

Special material considerations are required not only for valve bodies but also for valve actuators. However, due to the internal works of actuators, problems caused by high temperature typically cannot be solved merely by material selection. Instead, means have to be employed to limit temperature exposure of the actuator.

One means of achieving this is to cool the valve casing so that excessive heat is not transferred to the actuator. US 7,481,058 B2 describes one such cooling configuration in which the valve casing is provided with cooling ports and means to pass cooling medium through these ports. Such configurations are complex and further require the configuration and supply of a cooling medium.

An alternate solution is to provide a distance spacer, made of a high hot strength material, between the valve casing and the actuator. Having a high hot strength means the connector spacer can tolerate the conducted heat energy from the valve casing while its length further enables it to lose some of this heat convectively, thus creating a temperature gradient between the casing and the actuator. By configuring the spacer length, a significantly large temperature gradient can be created that ensures the actuator is not exposed to excessive temperatures. However, in providing the temperature gradient, the space must be configured to withstand the high temperature of the valve casing. For valves in high steam temperature service typically this means the spacer must be made of expensive nickel-alloy.

There is therefore a need to provide alternate simple cost effective solutions that overcome the problem of excessive heat exposure of steam valve actuators when placed in about 650 degrees Celsius steam service.

### SUMMARY

A steam valve is disclosed that provides an alternate means to overcome the problem of conductive heat exposure of a steam valve actuator in high temperature steam service.

Embodiments attempt to address this problem by means of the subject matter of the independent claim. Advantageous embodiments are given in the dependent claims.

The invention is based on the general idea of providing a high temperature steam valve spacer between an actuator and casing that has graded temperature resistance.

According to an aspect, there is provided a high temperature steam valve comprising a casing, an actuator for operating the valve, and a connector that is at one end is fixed adjacent to the casing and at a second end fixed to an actuator. The connector has first and second spacers, each with first and second distal ends. The first end of the first spacer is fixed adjacent to the casing and its second end is fixed adjacent to the second spacer. The second end of the second spacer is then further fixed adjacent to the actuator. The second spacer is made of a material with a lower hot strength than the first spacer.

Typically, the first spacer length is configured to ensure, during valve operation, the second spacer is not exposed to a temperature that exceeds its hot strength while being configured short enough to minimise the use of hot strength material.

In another aspect the first spacer comprises a plurality of distance spacers that are spaced apart from each other so as to create an air gap therebetween. This gap reduces the thermal heat energy transferred to the first spacer from the casing. The spacers may further include surface area increasing features that increase the convective heat loss from the spacers and thus increase the thermal gradient along their extensional length. In this way, shorter spacers, with lower material weight, can be provided.

In an aspect, screw means fix the first spacer to the second spacer and the first spacer to the casing respectively. The same screw means may be used to fix the first spacer, the second spacer and the casing together. The screw means provides an alternative to welding that overcomes problems of welding together dissimilar metals.

In an aspect, a heat-insulating member, typically made of ceramic or a metal with low heat conductivity, is located between the first spacer and the casing.

To reduce the heat flow, the flange of the first spacer to the casing, the flange of the first spacer to the second spacer, or the flange of the second spacer to the actuator might include grooves in the split plane to further reduce the heat flow.

Other aspects and advantages of the present invention will become apparent from the following description, taken in connection with the accompanying drawings wherein by way of illustration and example, an embodiment of the invention is disclosed.

### BRIEF DESCRIPTION OF THE DRAWINGS

By way of example, an embodiment of the present disclosure is described more fully hereinafter with reference to the accompanying drawings, in which:
Figure 1 is a perspective view of a high temperature steam valve according to an exemplary embodiment;
Figure 2 is a perspective view of a high temperature steam valve according to an exemplary embodiment;
Figure 3 is an expanded view of the connector of the valve of Fig. 1 or 2 show details of an exemplary connection arrangement of the connector;
Figure 4 is an expanded view of the connector of the valve of Fig. 1 or 2 show details of another exemplary connection arrangement of the connector;
Figure 5 is an expanded view of a spacer of the connector of the valve of Fig. 1 or 2 showing an exemplary insulation spacer; and
Figures 6 and 7 are schematic views of portions of a spacer of exemplary embodiments, showing face features of the portion.

### DETAILED DESCRIPTION

In the following description, for purposes of explanation, numerous specific details are set forth to provide a thorough understanding of exemplary embodiments. It will be evident, however, that embodiments may be practiced without these specific details.

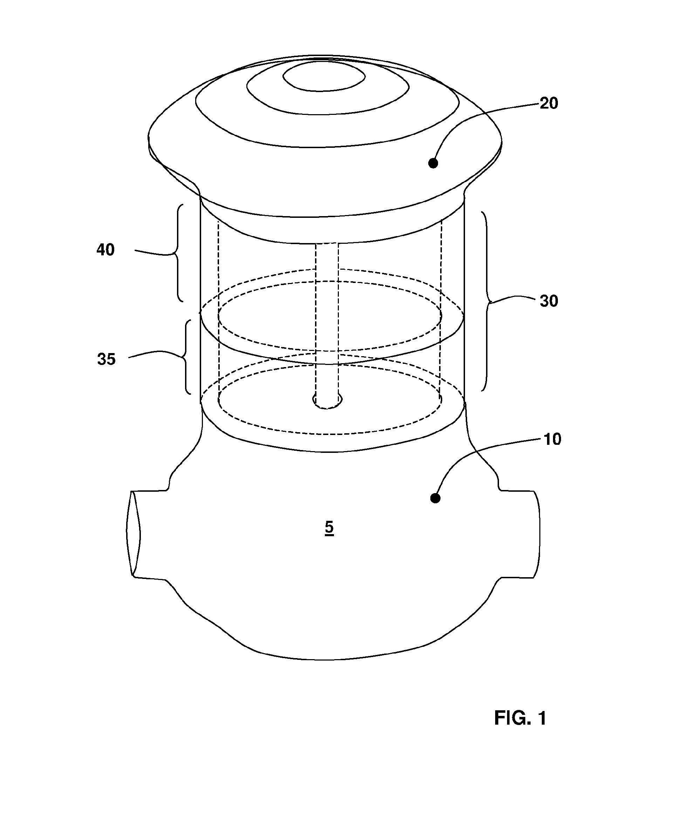

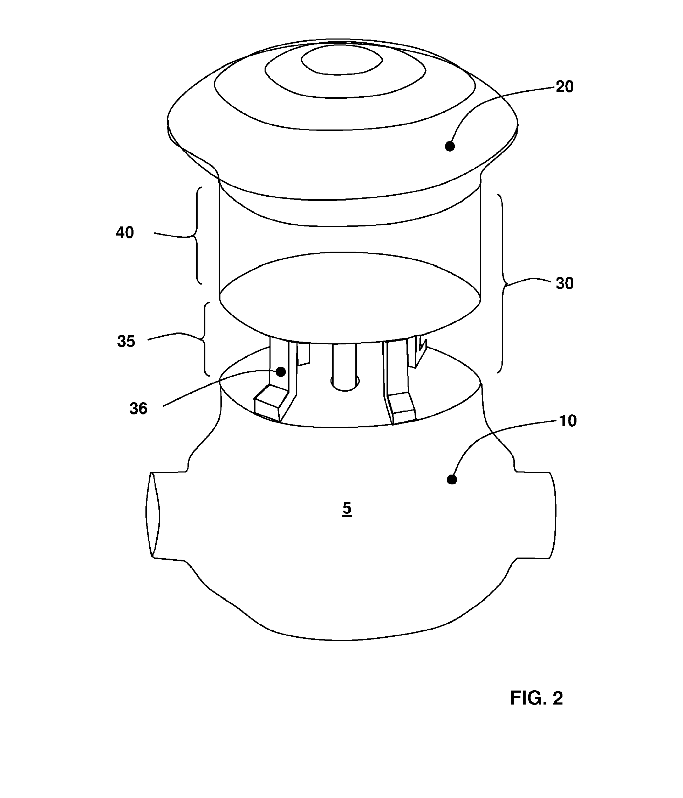

Figs1 and 2 show a typical high temperature steam valve 5 that has a casing 10, an actuator 20 for operating the valve 5; and a connector 30 extending between the casing 10 and the actuator 20. In the exemplary embodiments shown in Figs. 1 and 2 the connector 30 comprises at least two distinct spacers 35,40: a first 35 with a higher hot strength fixed adjacent to the casing 10; and a second 40 with lower hot strength section that is fixed adjacent to the first spacer 35 and the actuator 20 such that it is between the first spacer 35 and the actuator 20.

In this arrangement, during operation, a natural temperature gradient across the extensional length of the spacers 35 40 is created due to convective heat loss to the surrounding environment. The first spacer 35, as it is adjacent the casing 10 and therefore exposed to the high temperatures of the casing 10, in an exemplary embodiment, is made of the same material as the casing 10. However, due to the temperature gradient across the second spacer 40, it is typically made of a material with a lower hot strength that the first spacer 35. This may be, for example, stainless steel instead of a nickel alloy. Further heat loss along the extensional length of the second spacer 40 also results in a lowering of the temperature at the distal end of the second spacer 40. In an exemplary embodiment, the length of the second spacer 40 is configured, in view of this temperature gradient, to ensure the actuator 20 is not exposed to excessive temperature.

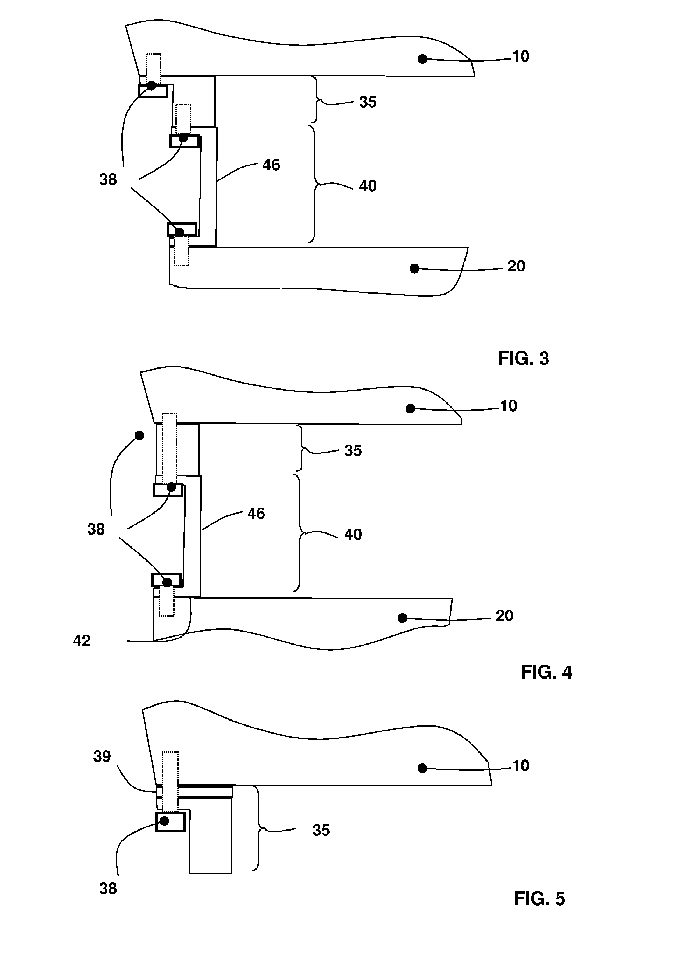

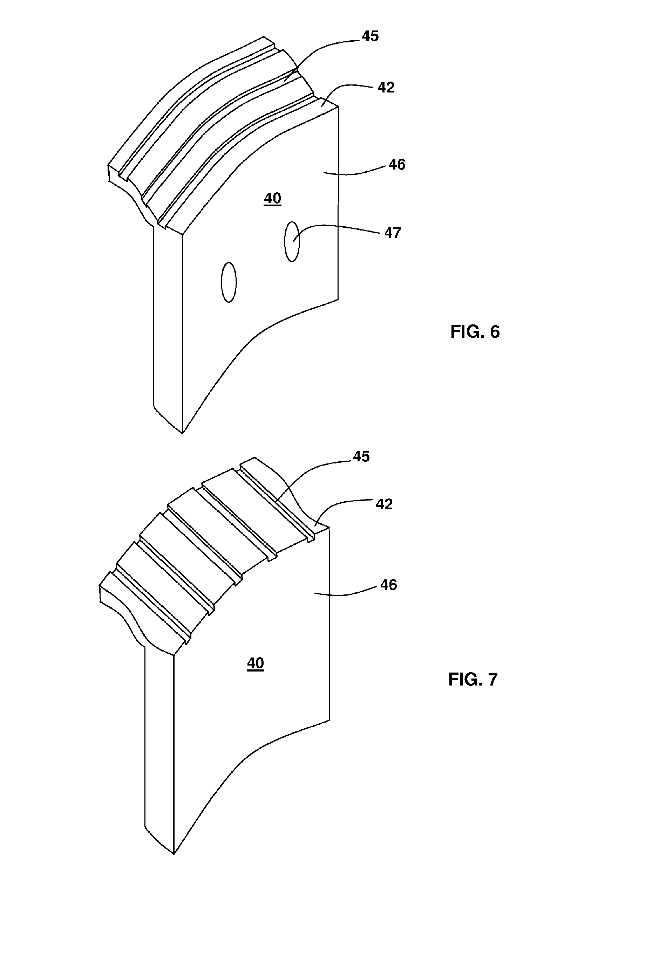

As shown in Fig. 4, in an exemplary embodiment, the second spacer 40 has an extended portion 46 spanning between first and second distal ends that each having a face 42, wherein the face 42 of the first end is fixed adjacent to the second end of the first spacer 35 and the face 42 of the second end is fixed adjacent to the actuator 20. In an exemplary embodiment, one or both faces 42 of the second spacer 40 include grooves 45, as shown in Figs 6 and 7, which may be formed in the radial direction, circumferential direction or a direction between these two extremes. The purpose of the grooves 45 is to limit surface contact between the first and second spacers 35 40 thus reducing the conductive heat transfer rate.

By segmenting the connector 30 along its extensional length between the casing 10 and actuator 20, it is possible to reduce the amount of expensive high hot strength material need to make the part.

Many factors are involved in defining the minimum extensional length of the first spacer 35 required to ensure sufficient convective heat loss from the first spacer 35 and the second spacer 40 and thus ensure that, in operation, the hot strength of the second spacer 40 and the actuator 20 are not exceeded. These factors include but are not limited to, casing 10 temperature, first spacer 35 surface areas per extensional length, the thermal conductivity of the material of the spacers 35, 40, ambient temperature and the presence of any insulation or other means that may limit convective heat loss.

In the exemplary embodiment shown in Fig. 1 the first spacer 35 is a unitary hollow cylindrical spacer. "Unitary" in this context means, "made of one piece ".

In another exemplary embodiment, as shown in Fig, 2 the first spacer 35 comprises a plurality of distance spacers 36 spaced apart from each other so as to create an air gap therebetween. By this means, the contact surface between the first spacer 35 and casing 10 may be reduced thus reducing the total conducted thermal energy provided to the first spacer 35. In addition, by the distance spacers 36 being individual spacers, the surface area to volume ratio of the first spacer 35 is increased so by increasing convective losses from the first spacer 35 resulting in a steeper temperature gradient thus enabling shortening of the first spacer 35. All these factors combined to reduce the quantity of potentially more expensive high hot strength material that must be used to form the first spacer 35 so as to shield the actuator 20.

In a further exemplary embodiment, shown in Fig. 5, the second spacer 40 includes openings 47, in the extended portion 46. The purpose of the openings is to reducing heat flow across of the second spacer 40.

In a further exemplary embodiment, the first spacer 35 is provided with surface area increasing feature or features. Such features include surface roughing, surface grooves, and/or well-known surface configurations that increase the surface area of a spacer.

In an exemplary embodiment, the casing 10 and the first spacer 35 are made of similar material to ensure that both features are capable to withstanding similar thermal stresses.

Fig 3 shows various exemplary embodiments in which screw means 38 are used to fix the first spacer 35 to the second spacer 40 and the first spacer 35 to the casing 10 respectively. In an exemplary embodiment, shown in Fig. 2, separate screw means 38 are used to fix the first spacer 35 and second spacer 40, and the first spacer 35 and the casing 10 together. In another exemplary embodiment, as shown in Fig. 4, the same screw means 38 fixes the first spacer 35, the second spacer 40 and the casing 10 together.

In this specification "to fix" and "fixing" means to make firm the relative location of two parts or spacers. "Fixing" may or may not include actual contact.

In not shown exemplary embodiments, a combination of welding and screw means 38 connect the various parts, such as the casing 10 and the actuator 20 and the spacers 35,40 of the connector 30, together.

While in some cases welding may be used to connect these parts 10,20, and spacers 35,40 it may not be possible, or at least be difficult, to join by welding due to their dissimilar composition. The exemplary embodiments shown in Figs, 3 and 4 therefore provide an alternative joining means.

In a further not shown exemplary embodiment, the fixing of the spacers 35, 40 to each other is achieved by a combination of powder metallurgy and hydrostatic pressing. For example, powdered material of the spacers 35, 40 are placed in a common mould after which they are hydrostatically pressed. This pressing increases the temperature of powdered material to the point where the spacers 35, 40 are cast and forged together. In this exemplary embodiment, the interface between the different materials of the spacers 35,40 defines the boundary between them.

Fig. 5 shows an exemplary embodiment in which a heat-insulating member 39 is located between the first spacer 35 and the casing 10. These heat insulating members 39 limit heat conduction to the first spacer 35 thus positively influencing the required extensional lengths of these spacers 35 i.e. enabling them to be made shorter. In an exemplary embodiment, the heat-insulating member 39 is made of ceramic due to its excellent heat insulation properties. However as ceramic cannot be welded to metals, the ceramic parts are fitted by screw means 38.

In a not shown exemplary embodiment, an additional or alternative heat-insulating member 39 is located between the first and the second spacers 35,40.

In another not shown exemplary embodiment an additional or alternative heat-insulating member 39 is located between the second spacer 40 and the actuator 20.

Although the disclosure has been herein shown and described in what is conceived to be the most practical exemplary embodiment the present disclosure can be embodied in other specific forms. The presently disclosed embodiments are therefore considered in all respects to be illustrative and not restricted. The scope of the invention is indicated by the appended claims rather that the foregoing description and all changes that come within the meaning and range and equivalences thereof are intended to be embraced therein.

### REFERENCE signs

- 5: Valve
- 10: Casing
- 20: Actuator
- 30: Connector
- 35: First spacer
- 36: Distance spacer
- 38: Screw means
- 39: Insulating member
- 40: Second spacer
- 42: Face
- 45: Groove
- 46: Extended portion
- 47: Openings

## Claims

1. A high temperature steam valve (5) comprising:
a casing (10);
a connector (30), fixed adjacent to the casing (10); and
an actuator (20), fixed adjacent to the connector (30), for operating the valve (5), the valve (5) **characterized by** the connector (30) comprising:
a first spacer (35), with first and second distal ends, the first end fixed adjacent to the casing (10), and
a second spacer (40), with an extended portion (46) that spans between first and second distal ends that each having a face (42) wherein the face (42) of the first end is fixed adjacent to the second end of the first spacer (35) and the face (42) of the second end is fixed adjacent to the actuator (20),
wherein the second spacer (40) is made of a material with a lower hot strength than the first spacer (35).

2. The valve (5) of claim 1 wherein the first spacer (35) comprises:
a plurality of distance spacers (36) spaced apart from each other so as to create an air gap therebetween.

3. The valve (5) of claim 1 wherein the first spacer (35) comprises a unitary hollow cylindrical.

4. The valve (5) of claim 1 or 3 wherein the length between the first and the second ends of the first spacer (35) is adapted, is such that, in operation, due to convective heat loss from the first spacer (35), the second spacer (40) does not exceed it's hot strength.

5. The valve (5) of any one of claims 1 to 4 wherein the face (42) of the second spacer (40) include surface area increasing feature(s) for increasing the surface area of the surface.

6. The valve (5) of claim 5 wherein the surface are increasing feature comprises are a plurality of radial grooves (45) and/or circumferential grooves (45).

7. The valve (5) of claim 5 wherein the extended portion (46) includes openings for reducing heat flow across of the second spacer (40).

8. The valve (5) of any one of claims 1 to 5 wherein screw means (38) fix the first spacer (35) to the second spacer (40) and the first spacer (35) to the casing (10) respectively.

9. The valve (5) of claim 8 wherein each of the screw means (38) extends through the first spacer (35), the second spacer (40), and casing (10) respectively.

10. The valve (5) of claim any one of claims 1 to 9 wherein the casing (10) and the first spacer (35) are made of similar material.

11. The valve (5) of any one of claims 1 to 10 wherein the second spacer (40) is made of stainless steel.

12. The valve (5) of any one of claims 1 to 11 wherein a heat-insulating member (39), is located between the first spacer (35) and the casing (10).

13. The valve (5) of claim 10 wherein the heat-insulating member (39) is made of ceramic.
